# EUROPÄISCHE PATENTANMELDUNG

(11) **EP 1 750 289 A1**
(43) Veröffentlichungstag der Anmeldung: **07.02.2007**
(21) Anmeldenummer: 05017144.6
(22) Anmeldetag: 05.08.2005
(51) Int. Cl.: H01H 9/06, H02K 23/66

(54) **Schaltvorrichtung**

(71) Anmelder: CEKA Elektrowerkzeuge AG + Co. KG, 9630 Wattwil (CH)
(72) Erfinder: Gerschwiler, Othmar, 9631 Ulisbach (CH); Lins, Anton, 72414 Rangendingen (DE); Stadelmann, Urs, 9620 Lichtensteig (CH); Rahm, Markus, 8604 Volkestwil (CH)
(74) Vertreter: Jakelski, Joachim

(57) **Zusammenfassung**

Eine Schaltvorrichtung für die elektrische Umschaltung, insbesondere Ein/Ausschalten und/oder Drehrichtungsumkehr von Elektromotoren, insbesondere für Elektrowerkzeuge, mit einem um vorgegebene Winkelbeträge verdrehbaren Schaltring, insbesondere eines Bürstenträgers, weist ein auf den Schaltring einwirkendes Betätigungshilfsmittel auf, welches bei einer Verdrehung des Schaltringes um einen ersten Winkelbetrag Energie speichert, die dann zur selbsttätigen Verdrehung des Schaltringes um einen zweiten Winkelbetrag wieder abgegeben wird.

## Beschreibung

### Stand der Technik

Die Erfindung betrifft eine Schaltvorrichtung nach dem Oberbegriff des Anspruchs 1.

Bei einer aus der DE 40 04 463 A1 bekannten Schaltvorrichtung dieser Art ist an einem äußeren zylindrischen Gehäuse eines Elektrowerkzeugs ein verdrehbarer Stellring angeordnet, der in Höhe eines B-Lagerschildes eines innerhalb des Gehäuses angeordneten Elektromotors so positioniert ist, dass dieser Stellring mit nach innen gerichteten Vorsprüngen in eine verdrehbare Platte oder einen Schaltring am Elektromotor eingreifen kann und dann bei eigener manueller Betätigung mit diesem gemeinsam eine Drehbewegung durchführt zum Ein-/Ausschalten und/oder zur Drehrichtungsumkehr des Elektromotors. Dabei ist mithilfe einer Vorspannungsfeder auch eine automatische Rückführung des Stellrings in seine Ausgangsposition vorgesehen, wenn der manuelle Eingriff aufhört. Um die Schaltvorrichtung gegen Federdruck in der ausgelenkten Winkelposition zu halten, arbeitet der Stellring mit einer lösbaren Arretiervorrichtung zusammen.

Diese bekannte Schaltvorrichtung, beispielsweise zum Ein-/Ausschalten eines Elektrohandwerkzeugs lässt sich nur dann einsetzen, wenn sich der manuell verdrehbare Stellring, der entweder außen oder innen im Gehäuse in geeigneter Weise gelagert sein kann, in Höhe des inneren Schaltrings des Elektromotors befindet, wobei die von dem Stellring durchzuführende Drehbewegung, um die elektrische Umschaltung am Elektromotor zu erreichen, in Winkelgraden der Schaltverdrehung entspricht, die im Inneren des Gehäuses angeordneten und zum Motor gehörenden Schaltringen durchgeführt werden muss, um in die jeweils andere Verstellposition zu gelangen.

Bekannt ist es auch, Elektrowerkzeuge, speziell Elektrohandwerkzeuge, mit von außen zugänglichen Kippschaltern, auch mit wippenähnlichem Aufbau, oder durch Schiebeschalter ein- und auszuschalten, wobei diese Schalter in geeigneter Weise außen am Gehäuse befestigt sind oder lediglich deren Betätigungsteile durch Gehäuseöffnungen ragen und entsprechend verstellt werden können. Bei vielen Elektrohandgeräten, bei denen eine Drehrichtungsumkehr des Elektromotors erforderlich ist, beispielsweise bei Bohrmaschinen, Bohrhämmern und dergleichen wird eine Umschaltung der Drehrichtung durch ein Betätigungsorgan erzielt, mit dem über einen Hebelmechanismus ein Bürstenträger verdrehbar ist.

Nachteilig ist es nun, dass der Winkelweg für die gesamte Bürstenverstellung eine große rotatorische bzw. bei Verwendung beispielsweise eines senkrecht zur Rotationsachse des Elektromotors angeordneten Querschiebers eine große translatorische Bewegung erfordert. Eine derart große translatorische Bewegung erfordert wiederum ein entsprechend großes Betätigungsorgan, das heißt einen entsprechend langen Querschieber. Ein solcher langer Querschieber, der seitlich über das Gehäuse des Elektrowerkzeugs übersteht, ist hinsichtlich der Handhabung des Elektrowerkzeugs nachteilig, da die Gefahr besteht, dass eine Drehrichtungsumschaltung durch unbeabsichtigtes Betätigen des Querschiebers erfolgt.

Der Erfindung liegt daher die Aufgabe zugrunde, die elektrische Umschaltung, also bevorzugt das Ein- und Ausschalten oder auch eine Drehrichtungsumkehr bei einem Elektrowerkzeug, insbesondere bei einem Elektrohandwerkzeug, so weiterzubilden, dass bei reduziertem Kraftaufwand eine Umschaltung mit reduziertem Verstellweg möglich ist.

### Vorteile der Erfindung

Diese Aufgabe wird erfindungsgemäß durch eine Schaltvorrichtung mit den Merkmalen des Anspruchs 1 gelöst.

Grundidee der Erfindung ist es, durch ein auf den Schaltring einwirkendes, Energie speicherndes und diese wieder abgebendes Betätigungshilfsmittel den Verstellweg dadurch zu reduzieren, dass das Betätigungshilfsmittel bei Verdrehen des Schaltrings um einen ersten Winkelbetrag Energie speichert, die dann zur selbsttätigen Verdrehung des Schaltrings um einen zweiten Winkelbetrag wieder abgegeben wird. Durch gewissermaßen Aufteilung des gesamten Drehwinkelbetrags in zwei Teilbeträge, wobei eine manuelle Verdrehung nur während der Verdrehung um den ersten Winkelbetrag erforderlich ist, wohingegen die Verdrehung des zweiten Winkelbetrags selbsttätig erfolgt, ist eine Reduktion des gesamten Verdrehwegs und damit Verstellwegs möglich. Durch Verringerung des Verstellwegs und Einsatz des Betätigungshilfsmittels ist auch eine einfachere und damit leichtere Verstellung möglich.

Rein prinzipiell können die beiden Winkelbeträge unterschiedlich ausgebildet sein. Eine vorteilhafte Ausführungsform sieht vor, dass der erste Winkelbetrag und der zweite Winkelbetrag jeweils etwa der Hälfte des gesamten Drehwinkelbetrags, um den der Schaltring verdrehbar ist, entsprechen.

Eine sehr vorteilhafte Ausführungsform sieht vor, dass das Betätigungshilfsmittel eine Feder ist, die bei Drehen des Schaltrings um den ersten Winkelbetrag gespannt wird und die durch Entspannen eine weitere selbsttätige Drehung des Schaltrings um den zweiten Winkelbetrag bewirkt. Eine solche Feder ist leicht herzustellen und zu montieren. Ihr Einsatz bei einem derartigen Betätigungsorgan hat darüber hinaus auch aus haptischer Sicht Vorteile.

Bevorzugt wird die Feder während des Drehens des Schaltrings durch eine relativ zur Feder verdrehbare Schaltkulisse gespannt und wieder entspannt.

Dabei kann vorgesehen sein, dass die Feder an dem Schaltring befestigt ist und zur Erzeugung einer Vorspannung mit einer ortsfest angeordneten Schaltkulisse zusammenwirkt.

Es kann aber umgekehrt auch vorgesehen sein, dass die Feder ortsfest angeordnet ist und zur Erzeugung einer Vorspannung mit einer an dem Schaltring befestigten Schaltkulisse zusammenwirkt.

Welche dieser beiden Ausführungsformen zum Einsatz kommen, hängt auch von dem verfügbaren Bauraum des Elektrowerkzeugs und von dessen Montage ab.

Hinsichtlich der Feder sind die unterschiedlichsten Federarten und -formen denkbar. Eine vorteilhafte Ausführungsform sieht vor, dass die Feder eine im Wesentlichen V-förmige, in Radialrichtung, insbesondere zur Rotationsachse des Elektromotors hin vorspringende Form aufweist.

Eine andere Ausführungsform sieht vor, dass die Feder wenigstens einen Schenkel aufweist, der in Radialrichtung spannbar ist.

Bevorzugt weist die Feder zwei Schenkel auf, deren einer in Radialrichtung spannbar ist, während sich der andere in Radialrichtung, beispielsweise an einer in Umfangsrichtung verlaufenden Wand oder dergleichen abstützt.

Die Schaltkulisse kann die unterschiedlichsten Formen aufweisen. Eine vorteilhafte Ausführungsform sieht vor, dass die Schaltkulisse in Umfangsrichtung ein radial vorspringendes Maximum bildend gekrümmt verläuft. Dabei kann die Schaltkulisse so gekrümmt verlaufend angeordnet sein, dass das Maximum radial nach außen vorspringt. Möglich ist es aber auch, dass das Maximum radial nach innen vorspringt - je nach Anordnung der mit dieser Schaltkulisse zusammenwirkenden Feder.

So wirkt beispielsweise die oben beschriebene V-förmig in Radialrichtung hin zur Drehachse vorspringende Feder mit einer von der Rotationsachse radial nach außen, ein Maximum bildenden gekrümmt vorspringenden Schaltkulisse zur Erzeugung einer Spannung der Feder zusammen.

In entsprechender Weise wirkt auch eine Feder, die einen oder zwei Schenkel aufweist, mit einer Schaltkulisse zusammen, die zu dem Schenkel hingewandt, eine vorspringende, ein Maximum bildende Gestalt aufweist.
Hierdurch wird eine Spannung der Feder und nach Überschreiten des Maximums wieder eine Entspannung der Feder erreicht. Vorzugsweise verläuft die Kontur der Schaltkulisse stetig, sodass die Feder über die Schaltkulisse in optimaler Weise "läuft".

Das Maximum der Schaltkulisse ist an einer Winkelposition angeordnet, die etwa der Hälfte des maximal möglichen Verdrehwinkelbetrags des Schaltringes entspricht.

Die Schaltkulisse ist in beiden Fällen im Wesentlichen an einer Drehposition angeordnet, die etwa dem ersten Winkelbetrag entspricht.

### Zeichnung

Weitere Vorteile und Merkmale der Erfindung sind Gegenstand der nachfolgenden Beschreibung sowie der zeichnerischen Darstellung von Ausführungsbeispielen.

In der Zeichnung zeigen:
- Fig. 1: schematisch explosionsartig die wesentlichen Teile eines Elektromotors mit einem ersten Ausführungsbeispiel einer von der Erfindung Gebrauch machenden Schaltvorrichtung;
- Fig.2: schematisch explosionsartig ein erstes Ausführungsbeispiel einer erfindungsgemäßen Schaltvorrichtung;
- Fig. 3a bis c: unterschiedliche Schaltstellungen der in Fig. 2 dargestellten Schaltvorrichtung;
- Fig. 4: explosionsartig ein weiteres Ausführungsbeispiel einer von der Erfindung Gebrauch machenden Schaltvorrichtung und
- Fig. 5a bis c: verschiedene Schaltstellungen der in Fig. 4 dargestellten Schaltvorrichtung.

### Beschreibung der Ausführungsbeispiele

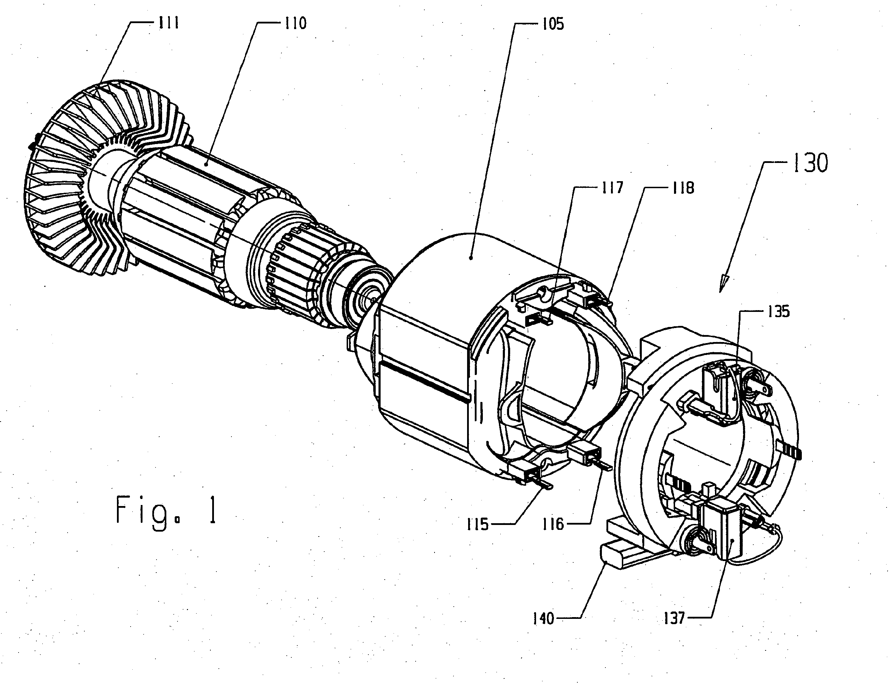

Ein in Fig. 1 dargestellter Elektromotor weist einen Stator 105 auf, in dem ein Anker 110 angeordnet ist. An dem Ende des Stators 105 ist eine als Ganze mit 130 bezeichnete Schaltvorrichtung vorgesehen, welche als Bürstenträger ausgebildet ist, auf dem zwei Bürstenhalter 135, 137 auf an sich bekannte Weise angeordnet sind. Die Schaltvorrichtung 130 weist an ihrem unteren Ende ein Betätigungsorgan 140 in Form eines Querschiebers auf, durch welche die Bürsten um einen vorgegebenen Winkelbetrag zur Drehrichtungsumkehr des Elektromotors verdrehbar sind.

Die Schaltvorrichtung 130 wird endseitig mit dem Stator verbunden, wobei im Stator vorgesehene Kontakte 115, 116, 117, 118 mit entsprechenden, in Fig. 1 nicht sichtbaren Kontakten der Schaltvorrichtung 130 zusammenwirken. Auf seiner der Schaltvorrichtung 130 abgewandten Seite weist der Anker 110 ein an sich bekanntes Lüfterrad 111 auf, welches der Kühlung des Elektromotors dient.

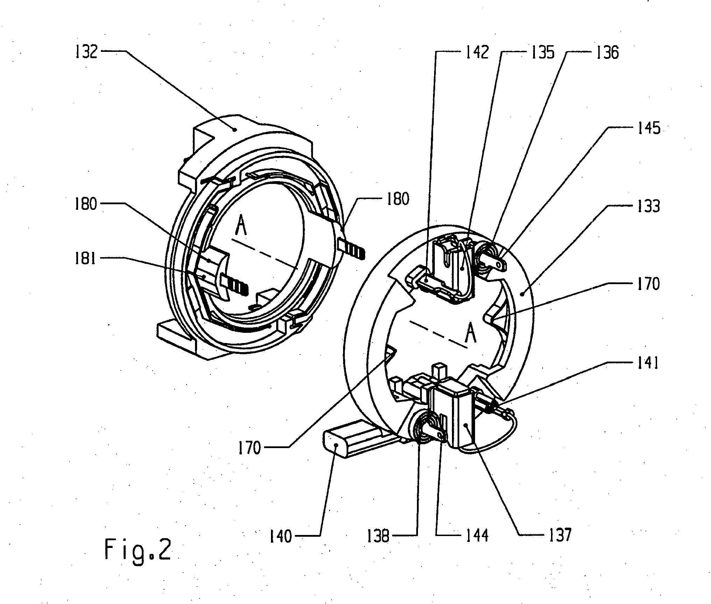

Der Aufbau der Schaltvorrichtung 130 ist in Fig. 2 detailliert dargestellt. Die Schaltvorrichtung 130 besteht aus zwei Teilen, einem ortsfesten, mit dem Stator 105 verbundenen Teil 132 und einem gegenüber diesem drehbeweglich angeordneten Teil 133. Auf dem drehbeweglichen Teil 133 sind die Bürstenhalter 135, 137 befestigt, welche Kohlebürsten unter Vorspannung durch entsprechende Federn 136, 138 lagern. Das Betätigungsorgan 140 ist in Form eines noch näher zu beschreibenden Querschiebers ausgebildet, der durch manuelle translatorische Betätigung über einen entsprechenden Hebel eine Drehbewegung des Teils 133 bewirkt.

An dem Teil 132 sind Kontakte 184 und 185 vorgesehen, die mit entsprechenden Kontakten 117, 116 des Stators im montierten Zustand elektrisch leitend verbunden sind. Die Bürsten sind mit Anschlusskontakten 141, 142 versehen.

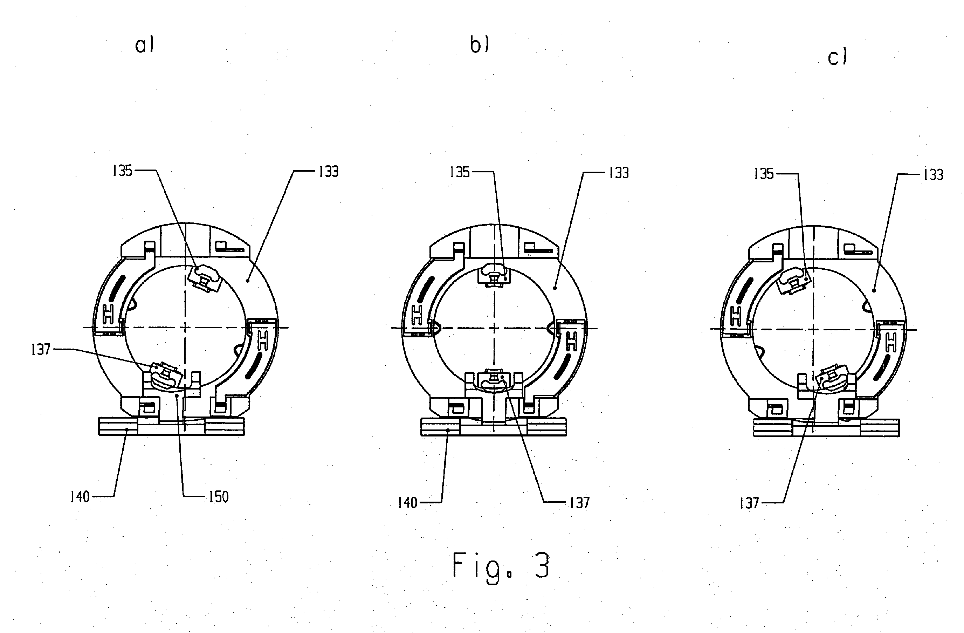

Fig. 3a bis c zeigt die verschiedenen Drehpositionen des Teils 133. Aus diesen Figuren ist insbesondere auch die Funktion des Querschiebers gut ersichtlich. Dieser wirkt auf eine als Hebel wirkende Y-förmige Gabel 150. In einer Stellung (Fig. 3a) ist der Querschieber nach links ausgelenkt, wodurch eine Drehung des Teils 133 im Uhrzeigersinn hervorgerufen wird. In Fig. 3c ist der Schieber nach rechts ausgelenkt, wodurch eine Drehung des Teils 133 im Gegenuhrzeigersinn hervorgerufen wird. In Fig. 3b ist der Querschieber 140 dagegen nicht ausgelenkt.

Durch entsprechendes Betätigen des Querschiebers 140 werden die Bürstenhalter 135, 137 um einen vorgegebenen Winkelbetrag verdreht.

In dem verdrehbaren Teil 133 sind Federn 170 angeordnet, die eine im wesentlichen zur Drehachse A des Elektromotors vorspringende V-förmige Gestalt aufweisen. Die Federn 170 sind in dem drehbaren Teil 133 befestigt. Die Federn 170 wirken mit an dem ortsfesten Teil angeformten Schaltkulissen 180 zusammen. Die Schaltkulissen 180 weisen jeweils eine radial nach außen gekrümmte, im Umfangsrichtung ein Maximum 181 bildende Form auf.

Die Funktion der Schaltvorrichtung ist nun folgende. Bei Betätigung des Querschiebers 140 laufen die Federn 170 über die Schaltkulisse 180, wobei sie durch Hinauflaufen auf das Maximum 181 gespannt werden. Die Federn 170 bewegen sich hierzu um einen ersten Winkelbetrag, der etwa der Hälfte des gesamten Winkelbetrags, um den die Bürstenhalter 135, 137 verdrehbar sind, entspricht. Nachdem die Federn 170 das Maximum 181 überschritten haben, verdreht sich das äußere Teil 133 gegenüber dem ortsfesten Teil 132 selbsttätig durch Entspannen der Federn 170. Die dabei durch Spannen der Federn 170 gespeicherte Energie wird in diesem Falle wieder abgegeben und zur Drehung des Teils 133 und damit der Bürstenhalter 135, 137 verwendet. Auf diese Weise ist gegenüber an sich aus dem Stand der Technik bekannter Vorrichtungen nur geringfügig mehr als der halbe Verstellweg des Querschiebers 140 erforderlich, da nach Drehung um den ersten Winkelbetrag eine selbsttätige Drehung des Teils 133 um den zweiten Winkelbetrag durch Entspannen der Federn 170 erfolgt, während diese über die Schaltkulisse 180 laufen.

In entsprechender Weise erfolgt eine Rückdrehung.

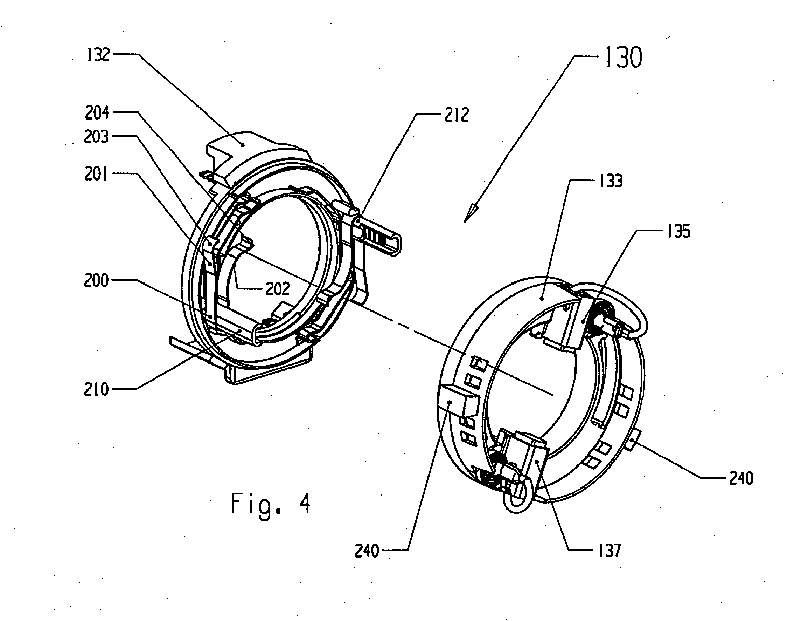

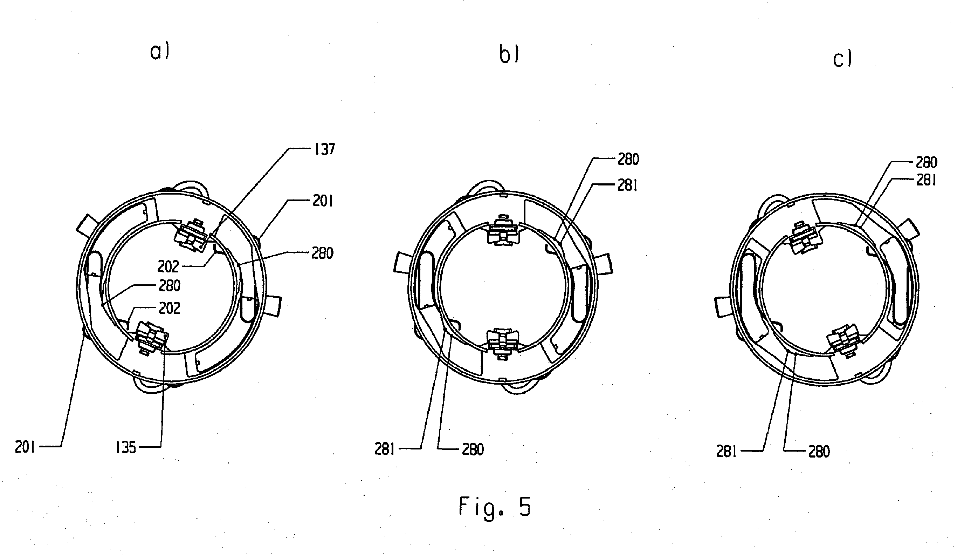

Bei einem weiteren, in Fig. 4 und Fig. 5 dargestellten Ausführungsbeispiel einer Schaltvorrichtung 130 sind gleiche Elemente mit den gleichen Bezugszeichen wie bei dem in Fig. 1 bis 3 dargestellten Ausführungsbeispiel gekennzeichnet, es wird insoweit auf die dortigen Ausführungen vollinhaltlich Bezug genommen.

Im Gegensatz zu den vorstehend beschriebenen Ausführungsbeispielen weist bei dem in Fig. 4 und Fig. 5 dargestellten Ausführungsbeispiel die Feder 200 zwei Schenkel 201, 202 auf, die an ihren vorderen Enden 203, 204 im wesentlichen c-förmig gebogen sind. Die Federn 200 sind an Isolationselementen 210, 212 elektrischer Kontakte befestigt. Im Gegensatz zu dem vorstehend beschriebenen Ausführungsbeispiel ist kein Querschieber vorgesehen, sondern die Drehung des Teils 133 erfolgt durch an dem drehbeweglich gelagerten Teil 133 angeordnete Betätigungsnasen 240, die von außerhalb manuell betätigbar sind.

Anders als bei dem oben in Verbindung mit Fig. 1 bis Fig. 3 beschriebenen Ausführungsbeispiel sind bei dem in Fig. 4 und Fig. 5 dargestellten Ausführungsbeispiel die Federn 200 an dem ortsfesten Teil 132 angeordnet, wohingegen die Schaltkulissen 280 (Fig. 5) an dem drehbeweglichen Teil 133 angeordnet sind. Dabei stützt sich jeweils der radial äußere Schenkel 201 der Federn an einer Wand des drehbeweglichen Teils ab, während der radial innere Schenkel 202 durch Drehen des Teils 133 über die Schaltkulisse 280 läuft, die wiederum konvex nach außen, das heißt von der Drehachse des Elektromotors wegspringend gebogen ist, derart, dass sie ein Maximum 281 aufweist. Der innere Schenkel 212 läuft über die Schaltkulisse 280, bis er deren Maximum 281 erreicht hat. Hierdurch wird die Feder 280 durch Aufeinanderzubewegen der beiden Schenkel 201, 202 gespannt. Nach Überschreiten des Maximums 281 entspannt sich die Feder 280 wieder, wobei sich ihre beiden Schenkel 201, 202 voneinander wegbewegen.

Auch hierbei ist nur geringfügig mehr als der halbe Winkelbetrag bei der Verdrehung manuell erforderlich. Die Verdrehung des Teils 133 um den zweiten Winkelbetrag erfolgt wiederum durch Entspannen der Federn 280.

Es versteht sich, dass die Erfindung nicht auf die oben beschriebenen Ausführungsformen, und insbesondere auf die Gestaltung der Federn der Schaltkulissen beschränkt ist. Vielmehr können auch beliebige andere, Energie speichernde und wieder abgebende Betätigungshilfsmittel vorgesehen sein und insbesondere auch völlig anders ausgestaltete Federn, die über einen vorgebbaren Winkelbetrag gespannt werden, wobei Energie gespeichert wird, die dann wieder durch selbsttätiges Entspannen an den Schaltring 133 abgegeben wird.

## Patentansprüche

1. Schaltvorrichtung für die elektrische Umschaltung, insbesondere Ein-/Ausschalten und/oder Drehrichtungsumkehr von Elektromotoren, insbesondere für Elektrowerkzeuge, mit einem um vorgegebene Winkelbeträge verdrehbaren Schaltring (133), insbesondere eines Bürstenträgers, **gekennzeichnet durch** ein auf den Schaltring (133) einwirkendes Betätigungshilfsmittel (170, 180; 200, 280), welches bei einer Verdrehung des Schaltringes (133) um einen ersten Winkelbetrag Energie speichert, die dann zur selbsttätigen Verdrehung des Schaltringes (133) um einen zweiten Winkelbetrag wieder abgegeben wird.

2. Schaltvorrichtung nach Anspruch 1, **dadurch gekennzeichnet, dass** der erste Winkelbetrag und der zweite Winkelbetrag etwa jeweils der Hälfte des Drehwinkels entsprechen, um den der Schaltring (133) verdrehbar ist.

3. Schaltvorrichtung nach Anspruch 1 oder 2, **dadurch gekennzeichnet, dass** das Betätigungshilfsmittel eine Feder (170; 200) ist, die bei Drehen des Schaltrings (133) um den ersten Winkelbetrag gespannt wird und die durch Entspannen eine weitere selbsttätige Drehung des Schaltringes (133) um den zweiten Winkelbetrag bewirkt.

4. Schaltvorrichtung nach Anspruch 3, **dadurch gekennzeichnet, dass** die Feder (170; 200) während des Drehens des Schaltrings (133) durch eine relativ zur Feder (170; 200) verdrehbare Schaltkulisse (180; 280) spannbar und entspannbar ist.

5. Schaltvorrichtung nach Anspruch 3 oder 4, **dadurch gekennzeichnet, dass** die Feder (170) an dem Schaltring (133) befestigt ist und mit einer ortsfesten Schaltkulisse (180) zusammenwirkt.

6. Schaltvorrichtung nach Anspruch 3 oder 4, **dadurch gekennzeichnet, dass** die Feder (200) ortsfest angeordnet ist und mit einer an dem Schaltring (133) befestigten Schaltkulisse (280) zusammenwirkt.

7. Schaltvorrichtung nach Anspruch 5 oder 6, **dadurch gekennzeichnet, dass** die Feder (170) eine im wesentlichen in Radialrichtung des Elektromotors V-förmig vorspringende Gestalt aufweist.

8. Schaltvorrichtung nach Anspruch 5 oder 6, **dadurch gekennzeichnet, dass** die Feder (200) wenigstens einen Schenkel aufweist, der in Radialrichtung spannbar ist.

9. Schaltvorrichtung nach Anspruch 8, **dadurch gekennzeichnet, dass** die Feder (200) zwei Schenkel (201, 202) aufweist, deren einer (202) in Radialrichtung spannbar ist, während sich der andere (201) in Radialrichtung abstützt.

10. Schaltvorrichtung nach einem der vorstehenden Ansprüche, **dadurch gekennzeichnet, dass** die Schaltkulisse (180; 280) in Umfangsrichtung ein radial vorspringendes Maximum (181; 182) bildend gekrümmt verläuft.

11. Schaltvorrichtung nach Anspruch 10, **dadurch gekennzeichnet, dass** das Maximum (181; 182) der Schaltkulisse (180; 280) an einer Winkelposition angeordnet ist, die im Wesentlichen etwa der Hälfte des maximal möglichen Verdrehwinkelbetrags des Schaltrings(133) entspricht.
